# EUROPÄISCHE PATENTSCHRIFT

(11) **EP 1 544 246 B1**
(45) Veröffentlichungstag und Bekanntmachung des Hinweises auf die Patenterteilung: **18.04.2012**
(21) Anmeldenummer: 04027970.5
(22) Anmeldetag: 25.11.2004
(51) Int. Cl.: C08L 23/10, C08J 9/16

(54) **Expandierbares, einen DSC-Doppelpeak aufweisendes Polyolefin**
Expandable Polyolefin with DSC double peak
Compositions expansibles de polyoléfines ayant un double maximum en DSC

(30) Priorität: 17.12.2003 DE 10359436
(43) Veröffentlichungstag der Anmeldung: 22.06.2005
(73) Patentinhaber: BASF SE, 67056 Ludwigshafen (DE)
(72) Erfinder: Braun, Frank, Dr., 67063 Ludwigshafen (DE); Maletzko, Christian, Dr., 67122 Altrip (DE)

(56) Entgegenhaltungen:
- EP-A- 0 520 773
- WO-A-01/29119
- WO-A-92/14784
- DE-A1- 4 420 590
- DE-A1- 10 054 929

## Beschreibung

Die Erfindung betrifft expandierbare treibmittelhaltige Polyolefin-Partikel, welche
a) 1 bis 99 Gew.-% eines Polypropylens A, und
b) 1 bis 99 Gew.-% eines Polyethylens als Polymeren B, das teilweise oder vollständig kristallin, und mit dem Polypropylen A unverträglich ist,
enthält und im Differential Scanning Calorimetry (DSC)-Diagramm einen Doppelpeak aus einem Niedertemperaturpeak mit einem Maximum im Bereich von 100 bis 140°C und einem Hochtemperaturpeak mit einem Maximum im Bereich von 130°C bis 180°C aufweist..

Außerdem betrifft die Erfindung ein Verfahren zur Herstellung des expandierbaren Polyolefins, die Verwendung des expandierbaren Polyolefins zur Herstellung von Polyolefin-Schaumstoffen.

Expandierbare Polyolefinpartikel, beispielsweise solche aus Polypropylen, sind bekannt. Sie enthalten in feiner Verteilung eingeschlossenes, jedoch noch nicht expandiertes Treibmittel und weisen deshalb eine deutlich höhere Dichte auf als expandierte Polyolefine. Expandierbare Polyolefinpartikel können in Suspension oder durch Extrusion hergestellt werden.

Beim Suspensionsverfahren - siehe z.B. die EP-A 540 271, WO 01/29119 und EP-A 1 281 729 - wird das Polyolefin als Granulat mit Wasser, einem Suspensionshilfsmittel und dem Treibmittel in einem geschlossenen Reaktor bis über die Erweichungstemperatur des Granulats erhitzt. Dabei werden die Polymerpartikel mit dem Treibmittel imprägniert. Anschließend wird die Suspension abgekühlt, wobei sich die Partikel unter Einschluss des Treibmittels verfestigen, der Reaktor entspannt und die treibmittelhaltigen (expandierbaren) Partikel aus der Suspension abgetrennt.

Bei dem z.B. in der EP-A 1 132 420 beschriebenen Extrusionsverfahren wird das Polyolefin in einem Extruder unter Aufschmelzen mit einem Treibmittel vermischt, das dem Extruder zugeführt wird. Die treibmittelhaltige Mischung wird unter solchen Druck- und Temperaturbedingungen ausgepresst und granuliert, dass das Polyolefingranulat nicht schäumt (expandiert). Dazu wird beispielsweise eine Unterwassergranulierung verwendet, die bei einem Wasserdruck von mehr als 2 bar betrieben wird.

Die EP-A 0 520 773 beschreibt expandierbare Polyolefinharz-Zusammensetzungen aus einem speziellen Polypropylen und Polyethylen, bei dem ein chemisches Treibmittel, beispielsweise Azocarbodiamid und ein Diacrylat als Vernetzer eingesetzt werden. Aus WO 92/14784 sind Heißsiegel-fähige Massen aus einem Polyethylen sehr niedriger Dichte und Polypropylen-basierten Polymeren bekannt. Ein Teil dieser Zusammensetzungen weist 2 oder mehrere Schmelzepeaks im DSC auf.

Die DE-A 44 20 590 betrifft Polyolefin-Partikelschaum auf Basis von homogenen Polymermischungen aus Ethylenpolymerisaten bzw. Propylenpolymerisaten. Die Schaumpartikel zeigen 2 Maxima auf der DSC-Kurve, die einen Abstand von mindestens 17°C voneinander aufweisen.

Die Eigenschaften der Polyolefinpartikel, insbesondere ihre thermischen Eigenschaften, können durch Differential Scanning Calorimetry (DSC) charakterisiert werden. Die EP-A 778 310, die EP 963 827 B1, die DE-A 100 54 929 und die ältere, nicht vorveröffentlichte deutsche Patentanmeldung Az. 10352894.6 beschreiben einen DSC-Doppelpeak bei Polyolefinpartikeln, die bereits expandiert (aufgeschäumt) sind. Die ältere, nicht vorveröffentlichte deutsche Anmeldung Az. 10356017.3 beschreibt DSC-Doppelpeaks bei expandierbaren (noch nicht geschäumten) Polyolefinpartikeln.

Es bestand die Aufgabe, expandierbare Polyolefinpartikel bereitzustellen, die sich durch vorteilhafte thermische und mechanische Eigenschaften auszeichnen. Außerdem sollte eine Möglichkeit gefunden werden, die Qualität dieser Polyolefinpartikel zuverlässig zu kontrollieren.

Demgemäß wurden die eingangs erwähnten, expandierbaren treibmittelhaltigen Polyolefin-Partikel, ein Verfahren zu deren Herstellung und die Verwendung des expandierbaren Polyolefins, gefunden. Bevorzugte Ausführungsformen der Erfindung sind den Unteransprüchen zu entnehmen.

Das expandierbare Polyolefin enthält
a) 1 bis 99, bevorzugt 10 bis 90 und besonders bevorzugt 20 bis 80 Gew.-% eines Polypropylens A, und
b) 1 bis 99, bevorzugt 10 bis 90 und besonders bevorzugt 20 bis 80 Gew.-% eines Polymeren B, das teilweise oder vollständig kristallin, und mit dem Polypropylen A unverträglich ist.

Als Polypropylen A kommen in Betracht:
1) Homopolypropylen,
2) Randomcopolymere des Propylens mit 0,1 bis 15, bevorzugt 0,5 bis 12 Gew.-% eines Comonomeren. Bevorzugtes Comonomer ist Ethylen oder ein C₄₋₁₀-α-Olefin oder deren Mischungen. Besonders bevorzugte Randomcopolymere sind Copolymere von Propylen mit 0,5 bis 6 Gew.-% Ethylen oder mit 0,5 bis 15 Gew.-% But-1-en, oder ein Terpolymer aus Propylen, 0,5 bis 6 Gew.-% Ethylen und 0,5 bis 6 Gew.-% But-1-en,
3) Mischungen der unter 1) oder 2) genannten Polymere mit 0,1 bis 75, bevorzugt 3 bis 50 Gew.-% eines Polyolefin-Elastomeren, z.B. eines Ethylen-Propylen-Blockcopolymeren mit 30 bis 70 Gew.-% Propylen,
4) Mischungen der unter 1) bis 3) genannten Polymere.

Der Kristallitschmelzpunkt geeigneter Polypropylene liegt üblicherweise im Bereich von 110 bis 170°C. Er ist beispielsweise als Peakmaximum im DSC-Diagramm bestimmbar. Die Schmelzwärme der Polypropylene ist ebenfalls per DSC bestimmbar und beträgt im Allgemeinen 20 bis 300 J/g. Der Schmelzflussindex (MFI, melt flow index) des Polypropylens beträgt in der Regel 0,1 bis 100 g/10 min, ermittelt bei 230°C und 2,16 kg Belastung nach DIN 53 735.

Bevorzugte Polypropylene A sind Homo- oder Copolymere des Propylens mit bis zu 15 Gew.-% Etylen und/oder But-1-en, besonders bevorzugt sind Propylen-EthylenCopolymere mit 1 bis 5 Gew.-% Ethylen. Sie weisen einen Kristallitschmelzpunkt von 120 bis 160°C, und eine Dichte von etwa 0,9 g/cm³, auf.

Die Polypropylene A sind bekannt und können nach üblichen Verfahren erhalten werden, beispielsweise nach dem Hochdruck- (ICI), Mitteldruck- (Phillips), Niederdruck-(Ziegler), Gasphasen-, Gasphasenwirbelbett- oder Metallocen-Verfahren.

Das Polymer B ist teilweise oder vollständig kristallin, und unverträglich mit dem Polypropylen A. Teilweise kristallin (auch als teilkristallin bezeichnet) bedeutet, dass in der Kristallstrukur des Polymers kristalline und amorphe Bereiche vorliegen. Die Kristallinität kann z.B. mittels Röntgenstrukturanalyse (röntgenographisch), Infrarotspektroskopie oder Kernresonanzspektroskopie (NMR) bestimmt werden.

Unter Unverträglichkeit wird Nichtmischbarkeit auf molekularer Ebene verstanden. Ein Polymer gilt mit einem anderen als verträglich, wenn im festen Zustand die Moleküle beider Polymere statistisch verteilt sind, wenn also die Konzentration eines Polymeren entlang eines beliebigen Vektors weder zu- noch abnimmt. Umgekehrt gilt als unverträglich, wenn sich im festen Zustand zwei Phasen ausbilden, die durch eine Phasengrenze voneinander getrennt sind. Die Phasengrenze kann scharf oder unscharf sein. Bei einer unscharfen Phasengrenze durchdringen sich die beiden Phasen an der Grenzfläche gegenseitig. Auch diese sog. Teilverträglichkeit ist eine Unverträglichkeit im Sinne der Erfindung.

Unverträglich mit dem Polypropylen A bedeutet, dass das Polypropylen A und das Polymer B auf molekularer Ebene nicht vollständig miteinander mischbar sind, sich also im festen Zustand eine Phasengrenze ausbildet. Geeignete Polymere B lassen sich durch Vorversuche auf einfache Weise ermitteln.

Als unverträgliches Polymer B verwendet man Polyethylen. Geeignete Polyethylene sind beispielsweise LD (low density), LLD (linear low density), MD (medium Polyethylen. Geeignete Polyethylene sind beispielsweise LD (low density), LLD (linear low density), MD (medium density) oder HD (high density), HMW (high molecular weight) oder UHMW (ultra high molecular weight).

Die Polyethylene können Homopolymere oder Copolymere sein. Solche Copolymere sind beispielsweise Randomcopolymere des Ethylens mit 0,1 bis 15, bevorzugt 1 bis 10 Gew.-% eines Comonomeren. Bevorzugtes Comonomer ist Propylen oder ein C₄₋₁₀-α-Olefin wie Buten oder Octen, oder deren Mischungen.

Der Kristallitschmelzpunkt geeigneter Polyethylene liegt üblicherweise im Bereich von 90 bis 150°C. Er ist beispielsweise als Peakmaximum im DSC-Diagramm bestimmbar. Die Schmelzwärme der Polyethylene ist ebenfalls per DSC bestimmbar und beträgt im allgemeinen 20 bis 300 J/g. Der Schmelzflussindex (MFI, melt flow index) des Polyethylens beträgt in der Regel 0,1 bis 100 g/10 min, ermittelt bei 190°C und 2,16 kg Belastung nach DIN 53 735.

Die Polyethylene sind bekannt und können nach üblichen Verfahren erhalten werden, beispielsweise nach dem Hochdruck- (ICI), Mitteldruck- (Phillips), Niederdruck- (Ziegler), Gasphasen-, Gasphasenwirbelbett- oder Metallocen-Verfahren.

Es können auch Mischungen mehrerer Polypropylene A, und/oder mehrerer unverträglicher Polymere B, verwendet werden.

Die Komponenten A und B bzw. die daraus erhältliche Mischung können als handelsübliches Granulat, Pulver, Grieß oder sonstiger Form eingesetzt werden. Zweckmäßigerweise wird ein Granulat eingesetzt. Geeignet ist z.B. ein sog. Minigranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des Polymers bzw. beider Polymere A und B, und weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5 mm. Das Granulat kann auch plättchenförmig geformt sein.

Das erfindungsgemäße expandierbare Polyolefin kann nach dem Suspensionsverfahren oder - bevorzugt - nach dem Extrusionsverfahren hergestellt werden. Je nach verwendetem Verfahren können die bevorzugten Treibmittel und Nukleierungsmittel ggf. variieren.

Das expandierbare Polyolefin enthält als Treibmittel insbesondere dann, wenn es nach dem Suspensionsverfahren hergestellt wird, organische Flüssigkeiten oder (weniger bevorzugt) anorganische Gase oder Gemische davon. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 C-Atomen. Besonders bevorzugt ist n-Pentan.

Bei der Herstellung via Extrusionsverfahren verwendet man als Treibmittel bevorzugt flüchtige organische Verbindungen mit einem Siedepunkt bei Normaldruck 1013 mbar von -5 bis 150, insbesondere 25 bis 125°C. Gut geeignet sind Kohlenwasserstoffe (bevorzugt halogenfrei), insbesondere C₄₋₁₀-Alkane, beispielsweise die Isomere des Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate. Bevorzugte Ketone sind 3,3-Dimethyl-2-butanon (= Pinakolon bzw. veraltet Pinakolin) und 4-Methyl-2-pentanon (= Methylisobutylketon). Als Ester kann man bevorzugt Isobutylacetat verwenden.

Auch Halogenkohlenwasserstoffe können verwendet werden, jedoch ist dies nicht besonders bevorzugt. Besonders bevorzugt ist das Treibmittel halogenfrei. Geringe Anteile halogenhaltiger Treibmittel im Treibmittelgemisch sollen jedoch nicht ausgeschlossen werden. Es versteht sich, dass auch Mischungen der genannten Treibmittel verwendet werden können.

Bei der Herstellung via Suspension oder Extrusion wird das Treibmittel in Mengen von vorzugsweise 1 bis 50, insbesondere 3 bis 30 Gew.-Teilen, bezogen auf 100 Gew.-Teile expandierbares Polyolefin, eingesetzt.

Üblicherweise enthält das expandierbare Polyolefin ein Nukleierungsmittel, das bewirkt, dass bei der Expansion (Aufschäumen) der expandierbaren Partikel ein feinzelliger Schaum entsteht. In manchen Fällen ermöglicht es überhaupt erst das Schäumen. Als Nukleierungsmittel eignen sich beispielsweise Talkum, Paraffine, Ruße, Graphitpulver, Kieselsäuren, bevorzugt pyrogene Kieselsäuren, weiterhin Zeolithe, Citronensäureester und Bentonite, insbesondere modifizierte Bentonite. Selbstverständlich können auch Mischungen dieser Nukleierungsmittel verwendet werden; dies kann besonders vorteilhaft sein.

Die Menge des Nukleierungsmittels beträgt bei der Herstellung via Suspension üblicherweise 0,001 bis 10, vorzugsweise 0,1 bis 5 und besonders bevorzugt 0,5 bis 3 Gew.-%, bezogen auf das expandierbare Polyolefin. Bei der Herstellung via Extrusion verwendet man in der Regel 0,01 bis 8, bevorzugt 0,1 bis 5 Gew.-Teile, bezogen auf 100 Gew.-Teile expandierbares Polyolefin.

Das erfindungsgemäße expandierbare Polyolefin kann außerdem die üblichen Zusatzstoffe enthalten, oder die Zusatzstoffe können im Extruder zugefügt werden. Solche Zusatzstoffe sind z.B. Antioxidantien, Stabilisatoren, Flammschutzmittel, Wachse, Füllstoffe, Pigmente und Farbstoffe. Sie werden in üblichen, an sich bekannten Mengen verwendet.

Beim Suspensionsverfahren stellt man bevorzugt vorab aus dem Polypropylen A und dem unverträglichen Polymer B eine Mischung her, beispielsweise durch Verkneten oder Extrudieren der Komponenten und Granulieren zu einem Minigranulat. In der Regel arbeitet man absatzweise in einem Imprägnierbehälter, z.B. in einem Rührkesselreaktor. In den Reaktor werden die Mischung aus A und B, z.B. das Minigranulat, eindosiert, außerdem Wasser bzw. ein anderes Suspensionsmedium, sowie das Treibmittel und ggf. ein Suspensionshilfsmittel. Als Suspensionshilfsmittel eigen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das Polymer, verwendet. Zu Einzelheiten siehe beispielsweise die EP-A 1 095 971.

Danach wird der Reaktor verschlossen und der Reaktorinhalt auf eine Imprägniertemperatur von üblicherweise mindestens 100°C erhitzt. Die Treibmittel kann dabei vor, während oder nach dem Aufheizen des Reaktorinhalts zugefügt werden. Die Imprägniertemperatur sollte in der Nähe der Erweichungstemperatur des Polyolefins liegen. Bei Polypropylen sind Imprägniertemperaturen von 110 bis 180, insbesondere 130 bis 160°C bevorzugt.

Je nach Menge und Art des Treibmittels sowie nach der Höhe der Temperatur stellt sich im verschlossene Reaktor ein Druck (Imprägnierdruck) ein, der im allgemeinen 2 bis 100 bar (absolut) beträgt. Erforderlichenfalls kann man den Druck durch ein Druckregelventil oder Nachpressen von Treibmittel regulieren. Bei den Imprägnierbedingungen (erhöhte Temperatur und Überdruck) diffundiert Treibmittel in die Polymergranulatpartikel hinein. Die Imprägnierdauer beträgt im allgemeinen 0,5 bis 10 Stunden. Weitere Einzelheiten sind beispielsweise der EP-A 1 095 971 zu entnehmen.

Nach dem Imprägnieren wird die Suspension auf üblicherweise unter 100°C abgekühlt, wodurch sich das Polyolefin wieder verfestigt und das Treibmittel einschließt. Danach wird entspannt. Man erhält expandierbare Polyolefinpartikel, die schließlich in üblicher Weise aus der Suspension abgetrennt werden. Anhaftendes Wasser wird in der Regel durch Trocknen entfernt.

Falls erforderlich kann man davor oder danach anhaftendes Suspensionshilfsmittel entfernen, indem man die Partikel mit einem geeigneten Reagens behandelt. Beispielsweise kann man mit einer Säure wie Salpetersäure, Salzsäure oder Schwefelsäure behandeln, um säurelösliche Suspensionshilfsmittel, z.B. Metallcarbonate oder Tricalciumphosphat, zu entfernen.

Bei dem - bevorzugten - Extrusionsverfahren werden dem Extruder die Komponenten A und B, das Treibmittel, ggf. das Nukleierungsmittel, und ggf. Zusatzstoffe gemeinsam (als Mischung) oder getrennt voneinander, an einer oder an verschiedenen Stellen des Extruders zugeführt. Dabei ist es möglich, jedoch nicht erforderlich, vorab aus A und B eine Mischung herzustellen. Beispielsweise kann man zunächst Polypropylen A, unverträgliches Polymer B, Nukleierungsmittel und ggf. Zusatzstoffe mischen und die Mischung dem Extruder zuführen, wonach dem Extruder das Treibmittel zugeführt wird, d.h. der Extruder mischt das Treibmittel in eine Polymerschmelze ein.

Im Extruder werden die genannten Einsatzstoffe unter Aufschmelzen des Polyolefins vermischt. Als Extruder kommen alle üblichen Schneckenmaschinen in Betracht, insbesondere Einschnecken- und Doppelschneckenextruder (z.B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München1998, Kap. 3.2.1 und 3.2.4, beschrieben sind. Der Extruder wird üblicherweise bei einer Temperatur betrieben, bei der das Polyolefin als Schmelze vorliegt, beispielsweise bei 130 bis 250, insbesondere 160 bis 220°C.

Drehzahl, Länge, Durchmesser und Ausgestaltung der Extruderschnecke(n), zugeführte Mengen und Extruderdurchsatz werden in bekannter Weise derart gewählt, dass im extrudierten Polyolefin das Nukleierungsmittel und ggf. die Zusatzstoffe gleichmäßig verteilt sind.

Um zu verhindern, dass die treibmittelhaltige Schmelze bereits beim Austritt aus dem Extruder aufschäumt, wird der Schmelzestrang bei solchen Temperatur- und Druckbedingungen ausgepresst und granuliert, dass praktisch kein Aufschäumen (Expandieren) erfolgt. Diese Bedingungen können nach Art und Menge der Polymere, der Zusatzstoffe und insbesondere des Treibmittels verschieden sein. Die optimalen Bedingungen lassen sich durch Vorversuche einfach ermitteln.

Eine technisch günstige Methode ist die Unterwassergranulierung in einem Wasserbad, das eine Temperatur unter 100°C aufweist und unter einem Druck von mindestens 2 bar (absolut) steht. Die Temperatur darf nicht zu tief sein, da sonst die Schmelze an der Düsenplatte erstarrt, und sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Wasserdruck sein. Bei dem besonders bevorzugt Treibmittel s-Pentan liegt die optimale Wasserbadtemperatur bei 30 bis 60°C und der optimale Wasserdruck bei 8 bis 12 bar (absolut). Statt Wasser kann man auch andere geeignete Kühlmedien verwenden. Ebenso kann man eine Wasserringgranulierung anwenden. Dabei ist der Schneidraum derart eingekapselt, dass die Granuliervorrichtung unter Druck betrieben werden kann.

Das granulierte, expandierbare Polyolefin wird anschließend in der Regel vom Wasser abgetrennt und ggf. getrocknet.

Erfindungsgegenstand ist demnach auch ein Verfahren zur Herstellung des erfindungsgemäßen expandierbaren Polyolefins, dadurch gekennzeichnet, dass man das Polypropylen A und das unverträgliche Polymer B in einem Extruder aufschmilzt und mit einem Treibmittel vermischt und die erhaltene Mischung beim Austritt aus dem Extruder mittels Unterwassergranulierung in einem Wasserbad, das eine Temperatur unter 100°C aufweist und unter einem Druck von mindestens 2 bar (absolut) steht, granuliert.

Das expandierbare Polyolefin weist erfindungsgemäß im DSC-Diagramm einen Doppelpeak auf. Der Doppelpeak besteht aus einem bei niedrigerer Temperatur gelegenen Peak (Niedertemperaturpeak), und einem bei höherer Temperatur gelegenen Peak (Hochtemperaturpeak). Man erhält das DSC-Diagramm beispielsweise durch Aufheizen einer Probe des Polyolefins (Menge beispielsweise 1 bis 8 mg) auf 200 bis 220°C mit einer Heizrate von 10 bis 20 K/min in einem DSC-Kalorimeter. Weitere Einzelheiten sind Absatz [0036] und Fig. 1 der EP 963 827 B1 zu entnehmen, auf die ausdrücklich verwiesen wird.

Durch Wahl von Polypropylen A und unverträglichem Polymer B kann man die Lage der Peaks, beispielsweise die Lage der Peakmaxima, und den Abstand zwischen den beiden Peaks bzw. deren Maxima, variieren. Durch Variation der Mengen von Polypropylen A und unverträglichem Polymer B lassen sich die Peakflächen unter den Peaks einstellen.

Die Komponenten A und B werden derart gewählt, dass das Maximum des Niedertemperaturpeaks bei 100 bis 140°C, und das Maximum des Hochtemperaturpeaks bei 130 bis 180°C liegt. Dies ist beispielsweise dann der Fall, wenn man als unverträgliches Polymer B, Polyethylen verwendet.

Die erfindungsgemäßen expandierbaren Partikel können in an sich bekannter Weise aufgeschäumt (verschäumt) werden. Dabei können expandierte Polyolefinpartikel oder Polyolefin-Schaumstoffe entstehen. Erfindungsgegenstand ist daher auch die Verwendung des expandierbaren Polyolefins zur Herstellung von expandiertem Polyolefin oder von Polyolefin-Schaumstoffen.

Das Verschäumen erfolgt in der Regel durch Erwärmen der Partikel in üblichen Verschäumungsvorrichtungen, z.B. mit Heißluft oder überhitztem Wasserdampf in einem sog. Druckvorschäumer, wie er zur Verarbeitung von expandierbarem Polystyrol (EPS) üblich ist. Bevorzugt verschäumt man die Partikel bei einer Temperatur, bei der sie erweichen (Erweichungsbereich), z.B. bei Temperaturen von 100 bis 180°C.

Verschäumt man mit Wasserdampf, so beträgt je nach Art und Menge von Polyolefin und Treibmittel, und der gewünschten Dichte des herzustellenden Schaums, der Druck des Wasserdampfs üblicherweise 2 bis 8, bevorzugt 1 bis 5 bar (absolut). Dabei ergeben höhere Drucke geringere Dichten des verschäumten Polyolefins, d.h. mit dem Wasserdampfdruck kann man die gewünschte Dichte einstellen. Die Dauer des Verschäumens beträgt üblicherweise 1 bis 300, bevorzugt 1 bis 30 sec. Nach dem Verschäumen wird entspannt und abgekühlt. Bevorzugt beträgt der Expansionsfaktor beim Verschäumen 2 bis 50.

Expandierte Partikel entstehen beispielsweise, wenn die expandierbaren Partikel ohne Verwendung einer geschlossenen Form aufgeschäumt werden. Schaumstoffe lassen sich z.B. durch Verschäumen der expandierbaren Polyolefinpartikel in geschlossenen Formen herstellen, oder indem zunächst die expandierbaren Partikel zu expandierten Partikeln verschäumt und letztere dann in einer geschlossenen Form erneut erwärmt, wobei sie weiter expandieren und dabei verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff-Formteile ein.

Die Polyolefinpartikel können vor und/oder nach dem Verschäumen mit einem Antiblockingmittel versehen werden. Geeignete Antiblockingmittel sind z.B. Talkum, Metallverbindungen wie Tricalciumphosphat, Calciumcarbonat, Kieselsäuren, insbesondere pyrogene Kieselsäuren wie Aerosil® von Fa. Degussa, Salze langkettiger (C₁₀₋₂₂) Carbonsäuren, beispielsweise Stearinsäuresalze wie Calciumstearat, Ester langkettiger Carbonsäuren, z.B. Glycerinester wie die Glycerinstearate, und Silikonöle. Das Antiblockingmittel wird in der Regel durch Mischen, Aufsprühen, Auftrommeln oder andere übliche Verfahren. Es wird üblicherweise in Mengen von 0,01 bis 20, bevorzugt 0,1 bis 10, besonders bevorzugt 0,5 bis 6 Gew.-Teilen, bezogen auf 100 Gew.-Teile des Polyolefins, verwendet.

Auch nach dem Verschäumen weist das Polyolefin einen DSC-Doppelpeak auf. Durch die Expansion geht der Doppelpeak demnach nicht verloren.

Es wurde gefunden, dass expandierbare und expandierte Polyolefine, deren DSC-Diagramm einen vorstehend beschriebenen Doppelpeak zeigt, besonders vorteilhafte thermische und mechanische Eigenschaften aufweisen.

Daher kann man die DSC zur Qualitätskontrolle der erfindungsgemäßen expandierbaren Polyolefine, und der daraus erhältlichen expandierten Polyolefine, verwenden.

### Beispiel

75Gew.-% Polyethylen (Lupolen 5621 D, Homo-Polyethylen der Fa. Basell) und 25Gew.-% Polypropylen (Moplen HP456H, Homo-Polypropylen der Fa. Basell) wurden in einem Doppelschnecken-Extruder vermischt und aufgeschmolzen. Der Schmelzestrang wurde mit einem Wasserbad abgekühlt und der erstarrte Strang zu zylinderförmigen Partikeln zerkleinert.

In einem Druckbehälter wurden 10kg dieser Partikel zusammen mit 1 kg n-Pentan, 16,7kg Wasser und 350g Tricalciumphosphat innerhalb 2 Stunden auf 151°C (Endtemperatur) erwärmt. Nach Erreichen der Endtemperatur wurde der Kesselinhalt auf 25°C abgekühlt.

Die treibmittelhaltigen Partikel wurden von der wässrigen Phase abgetrennt und getrocknet. Sie konnten durch Bedampfen mit 4 bar Wasserdampf in einer geschlossenen Form auf das Dreifache ihres ursprünglichen Volumens expandiert werden.

Das DSC-Thermogramm weist vor und nach dem Expandieren einen Doppelpeak auf. Maximum Niedertemperaturpeak: 137°C, Maximum Hochtemperaturpeak: 174°C.

## Patentansprüche

1. Expandierbare, treibmittelhaltige Polyolefin-Partikel, welche
a) 1 bis 99 Gew.-% eines Polypropylens A, und
b) 1 bis 99 Gew.-% eines Polyethylens als Polymeren B, das teilweise oder vollständig kristallin, und mit dem Polypropylen A unverträglich ist,
enthält und im Differential Scanning Calorimetry (DSC)-Diagramm einen Doppelpeak aus einem Niedertemperaturpeak mit einem Maximum im Bereich von 100 bis 140°C und einem Hochtemperaturpeak mit einem Maximum im Bereich von 130°C bis 180°C aufweist.

2. Expandierbare, treibmittelhaltige Polyolefin-Partikel nach Anspruch 1, **dadurch gekennzeichnet, dass** man bei der Herstellung via Extrusionsverfahren als Treibmittel eine flüchtige organische Verbindung mit einem Siedepunkt bei 1013 mbar von -5 bis 125°C verwendet.

3. Expandierbare, treibmittelhaltige Polyolefin-Partikel nach Anspruch 1 oder 2,
**dadurch gekennzeichnet, dass** man bei der Herstellung via Suspension oder Extrusion 3 bis 30 Gew.-Teile Treibmittel, bezogen auf 100 Gew.-Teile expandierbare Polyolefin-Partikel, einsetzt.

4. Expandierbare, treibmittelhaltige Polyolefin-Partikel nach einem der Ansprüche 1 bis 3, **dadurch gekennzeichnet, dass** sie
a) 20 bis 80 Gew.-% eines Polypropylens A und
b) 20 bis 80 Gew.-% eines Polymeren B
enthalten.

5. Verfahren zur Herstellung von expandierbaren Polyolefin-Partikeln nach einem der Ansprüche 1 bis 4, **dadurch gekennzeichnet, dass** man das Polypropylen A und das unverträgliche Polymer B in einem Extruder aufschmilzt und mit einem Treibmittel vermischt und die erhaltene Schmelze beim Austritt aus dem Extruder mittels Unterwassergranulierung in einem Wasserbad, das eine Temperatur unter 100°C aufweist und unter einem Druck von mindestens 2 bar (absolut) steht, granuliert.

6. Verwendung der expandierbaren Polyolefin-Partikel gemäß den Ansprüchen 1 bis 4 zur Herstellung von Polyolefin-Schaumstoffen.

## Claims

1. Expandable, blowing agent-containing polyolefin beads comprising
a) 1 to 99 wt% of a polypropylene A, and
b) 1 to 99 wt% of a polyethylene as polymer B, which is partly or wholly crystalline, and is incompatible with said polypropylene A,
and having a differential scanning calorimetry (DSC) diagram showing a double peak made up of a low-temperature peak having a maximum in the range from 100 to 140°C and a high-temperature peak having a maximum in the range from 130°C to 180°C.

2. The expandable, blowing agent-containing polyolefin beads according to claim 1, wherein the blowing agent used when they are produced via extrusion processes is a volatile organic compound having a 1013 mbar boiling point of -5 to 125°C.

3. The expandable, blowing agent-containing polyolefin beads according to claim 1 or 2, wherein from 3 to 30 parts by weight of blowing agent are used per 100 parts by weight of expandable polyolefin beads when they are produced via suspension or extrusion.

4. The expandable, blowing agent-containing polyolefin beads according to any of claims 1 to 3, comprising
a) 20 to 80 wt% of a polypropylene A, and
b) 20 to 80 wt% of a polymer B.

5. A process for producing expandable polyolefin beads according to any of claims 1 to 4, which comprises said polypropylene A and the incompatible polymer B being extruder melted and mixed with a blowing agent and the melt obtained being pelletized on exit from the extruder using underwater pelletization in a water bath which has a temperature below 100°C and is under a pressure of at least 2 bar (absolute).

6. The use of the expandable polyolefin beads according to claims 1 to 4 for producing foamed polyolefin materials.

## Revendications

1. Particules expansibles, contenant un agent gonflant, de polyoléfine qui contient
a) 1 à 99% en poids d'un polypropylène A, et
b) 1 à 99% en poids d'un polyéthylène comme polymère B, qui est partiellement ou totalement cristallin et qui est incompatible avec le polypropylène A,
et qui présente dans le diagramme de calorimétrie différentielle par balayage (Differential Scanning Calorimetry - DSC) un double pic formé d'un pic de température basse présentant un maximum dans la plage de 100 à 140°C et un pic de température élevée présentant un maximum dans la plage de 130°C à 180°C.

2. Particules expansibles, contenant un agent gonflant, de polyoléfine selon la revendication 1, **caractérisées en ce qu'**on utilise, lors de la préparation via des procédés d'extrusion, comme agent gonflant, un composé organique volatil présentant un point d'ébullition à 1013 mbars de -5 à 125°C.

3. Particules expansibles, contenant un agent gonflant, de polyoléfine selon la revendication 1 ou 2, **caractérisées en ce qu'**on utilise, lors de la préparation par une suspension ou par extrusion, 3 à 30 parties en poids d'agent gonflant par rapport à 100 parties en poids de particules de polyoléfine expansibles.

4. Particules expansibles de polyoléfine, contenant un agent gonflant, selon la revendication 1 à 3, **caractérisées en ce qu'**elles contiennent
a) 20 à 80% en poids d'un polypropylène A, et
b) 20 à 80% en poids d'un polymère B.

5. Procédé pour la préparation de particules expansibles de polyoléfine selon l'une quelconque des revendications 1 à 4, **caractérisé en ce qu'**on fond le polypropylène A et le polymère incompatible B dans une extrudeuse, on mélange avec un agent gonflant et on granule la masse fondue obtenue à la sortie de l'extrudeuse par une granulation sous eau dans un bain d'eau qui présente une température inférieure à 100°C et qui se trouve sous une pression d'au moins 2 bars (absolus).

6. Utilisation des particules expansibles de polyoléfine selon les revendications 1 à 4, pour la préparation de mousses de polyoléfine.
